# FASCICULE DE BREVET EUROPEEN

(11) **EP 1 860 022 B1**
(45) Date de publication et mention de la délivrance du brevet: **15.07.2009**
(21) Numéro de dépôt: 07300866.6
(22) Date de dépôt: 16.03.2007
(51) Int. Cl.: B62D 29/00, B62D 35/02

(54) **Carenage sous caisse de véhicule automobile et véhicule automobile comportant un tel carenage**
Unterbodenverkleidung eines Kraftfahrzeugs und eine solche Verkleidung umfassendes Kraftfahrzeug
Shielding under the body of an automobile and automobile comprising such shielding

(30) Priorité: 26.05.2006 FR 0651922
(43) Date de publication de la demande: 28.11.2007
(73) Titulaire: RENAULT S.A.S., 92100 Boulogne Billancourt (FR)
(72) Inventeur: Fenal, Francois, 92130 Issy Les Moulineaux (FR); Vasseur, Patrice, 75007 Paris (FR); Noury, Sylvain, 91300 Massy (FR)

(56) Documents cités:
- EP-A- 1 442 966
- EP-A- 1 514 772
- FR-A- 2 869 585

## Description

### DOMAINE TECHNIQUE ET ART ANTÉRIEUR

La présente invention se rapporte à un carénage sous caisse pour véhicule automobile et à un véhicule automobile, notamment de type tout chemin comportant un tel carénage.

Un exemple d'un tel carénage est divulgué par le document FR 2 869 585.

Un véhicule tout chemin, et dans une plus large mesure un véhicule tout-terrain, permet de circuler sur des terrains relativement accidentés avec un confort de conduite amélioré par rapport aux véhicules type berline. En outre, celui-ci est plus robuste.

Cependant, lors de la circulation sur des terrains accidentés, avec des cailloux et/ou des branches, la partie inférieure de la caisse du véhicule automobile, dite sous caisse, est soumise à des chocs et des frottements qui peuvent détériorer des câbles ou des conduites.

Notamment, dans le cas où le groupe motopropulseur se trouve à l'arrière du véhicule, et la batterie, ainsi que le radiateur se trouvent à l'avant du véhicule, des tuyaux et des câblages sont disposés le long du sous caisse en regard du sol.

Ainsi, si le véhicule roule sur une branche de taille importante, il existe un risque qu'une extrémité de celle-ci se coince entre le sous caisse et un tuyau ou un câble, et provoque un arrachement ou pour le moins une détérioration de celui-ci.

Pour lutter contre ces risques de détérioration, il a été proposé d'équiper les véhicules de carénages locaux en matériau plastique.

Ce carénage partiel offre une bonne protection. Cependant il peut perturber l'écoulement de l'air, et par conséquent détériorer l'aérodynamisme du véhicule, qui dans le cas des véhicules type tout chemin est inférieur à celui des berlines du fait d'une garde au sol importante. Cette perte d'aérodynamisme provoque, par ailleurs, une augmentation de la consommation de carburant.

Un mastic, dit anti-gravillonnage, est également appliqué sur toute une grande partie de la surface du sous caisse. Cependant, ce mastic n'améliore pas les propriétés aérodynamiques du véhicule. En outre, dans le cas où le châssis est réalisé en alliage d'aluminium, il n'existe pas ou peu de mastic convenant à une telle application.

Toujours dans le cas des châssis en alliage d'aluminium, ceux-ci sont réalisés avec des profilés de faible aérodynamisme. Ils peuvent, en outre, se montrer moins résistants aux chocs.

Il existe également des carénages recouvrant la quasi-totalité du sous caisse, cependant l'aérodynamisme n'est pas pris en compte.

De plus, la technique actuelle de pose du carénage partiel est longue et d'un prix de revient élevé, puisqu'elle nécessite le montage séparé des carénages en matériau plastique à disposer à des endroits déterminés et la pose de mastic, impliquant donc deux types de robots pour le montage.

Cette technique n'est donc pas optimale pour un montage sur chaîne de fabrication.

C'est par conséquent un but de la présente invention d'offrir un véhicule automobile, notamment de type tout chemin, dont la sécurité d'utilisation dans toutes les conditions de circulation est encore améliorée.

C'est également un but de la présente invention d'offrir un véhicule automobile offrant un aérodynamisme amélioré et, par conséquent, une consommation réduite en carburant.

### EXPOSÉ DE L'INVENTION

Le but précédemment énoncé est atteint par un carénage destiné à recouvrir une majeure partie du sous caisse, et comportant des moyens de circulation d'air dans le compartiment avant et le compartiment arrière du véhicule automobile.

Cette couverture quasi-totale permet une protection améliorée des éléments sensibles courant le long du sous caisse.

En outre, l'air s'écoule d'autant mieux que les parties en saillie sont réduites, du fait d'un carénage s'étendant sur une majeure partie du sous caisse.

Par ailleurs, l'écoulement d'air vers l'extérieur du compartiment moteur et l'admission d'air vers l'intérieur du compartiment arrière augmente l'aérodynamisme du véhicule.

En outre, le carénage suivant l'invention peut ne comporter que trois à quatre éléments ayant un montage similaire, le montage est ainsi simplifié et accéléré.

En d'autres termes, le carénage selon l'invention forme une coquille rapportée sur le dessous du véhicule automobile pour l'isoler des éléments extérieurs.

La présente invention a, par conséquent, principalement pour objet un carénage sous caisse pour véhicule automobile d'axe longitudinal destiné à s'étendre d'un dessous d'un compartiment avant du véhicule automobile à un dessous d'un compartiment arrière du véhicule automobile, comportant des moyens d'extraction d'air contenu dans le compartiment avant et des moyens d'admission d'air contenu dans le compartiment arrière.

Dans un exemple avantageux de réalisation, le carénage selon l'invention comporte au moins trois parties, une partie avant située dans un premier plan, une partie centrale disposée dans un deuxième plan, et une troisième partie disposée dans un troisième plan, les premier, deuxième et troisième plans étant sensiblement parallèles entre eux, dans lequel le deuxième plan est décalé suivant un axe sensiblement perpendiculaire au deuxième plan, par rapport aux premier et troisième plans de manière à former des premier et deuxième décrochements au niveau, respectivement, des raccordements entre les première et deuxième parties, et les deuxième et troisième parties, les décrochements étant sensiblement en regard, et dans lequel les moyens d'extraction d'air comportent au moins une ouverture pratiquée dans le premier décrochement, et les moyens d'admission d'air comportant au moins une ouverture pratiquée dans le deuxième décrochement.

Cette réalisation composite du carénage facilite sa fabrication et son montage sur le véhicule automobile.

L'ouverture des moyens d'extraction d'air peut être en forme de fente s'étendant perpendiculairement par rapport à l'axe longitudinal, et les moyens d'admission d'air peuvent comporter avantageusement plusieurs ouvertures en forme de fente s'étendant perpendiculairement à l'axe longitudinal.

Dans un exemple de réalisation, la partie avant a la forme d'un trapèze isocèle dont la plus petite base se raccorde à la partie centrale, la partie centrale est de forme sensiblement rectangulaire dont la longueur est orientée parallèlement à l'axe longitudinal, et la partie arrière a sensiblement la forme d'un trapèze isocèle, dont une grande base se raccorde à la partie centrale, les côtés reliant la grande base à une petite base de ladite troisième partie étant concaves. Ainsi le carénage couvre de manière efficace le sous caisse.

La partie centrale peut, avantageusement, comporter deux éléments de forme rectangulaire, dont la longueur est orientée perpendiculairement à l'axe longitudinal pour faciliter sa fabrication et son montage.

Le carénage selon l'invention est, par exemple réalisé en matériau thermoplastique injecté, offrant alors un poids réduit.

La présente invention a également pour objet un véhicule automobile comportant un châssis, des berceaux avant et arrière et un carénage sous caisse selon la présente invention, ledit carénage étant fixé aux berceaux avant et arrière et au châssis.

La partie avant du carénage peut se raccorder à un bouclier avant et à des écrans de passage de roue avant du véhicule automobile, la partie centrale peut se raccorder à des élargisseurs de bavolet du véhicule automobile et aux parties avant et arrière, et la partie arrière peut se raccorder à la partie centrale, et à des écrans de passage de roue arrière du véhicule automobile.

Le véhicule automobile selon la présente invention comporte avantageusement un groupe motopropulseur disposé dans le compartiment arrière, et une batterie et un radiateur disposés dans le compartiment avant.

Une extrémité inférieure du châssis se situe, par exemple dans un plan disposé au dessus d'un plan contenant une extrémité inférieure du berceau avant et d'un plan contenant une extrémité inférieure du berceau arrière.

La fixation du carénage aux berceaux avant et arrière et au châssis s'effectue avantageusement par vissage, et ou rivetage et ou encliquetage.

Le véhicule selon la présente invention peut comporter une caisse rapportée sur le châssis, lequel est réalisé avec des profilés et/ou tubes en aluminium.

### BRÈVE DESCRIPTION DES DESSINS

La présente invention sera mieux comprise à l'aide de la description qui va suivre et des dessins annexés, sur lesquels :
- la figure 1 est vue en plan d'un carénage selon la présente invention, la face représentée est celle qui est en regard de la route lorsque celui-ci est monté sur un véhicule automobile,
- la figure 2A est une vue de détail de la partie avant du carénage de la figure 1 monté sur un véhicule automobile,
- la figure 2B est une vue en coupe longitudinale de la figure 2A, certains éléments seulement du véhicule étant visibles,
- la figure 3A est une vue de détail de la partie arrière du carénage de la figure 1 monté sur un véhicule automobile,
- la figure 3B est une vue en coupe longitudinale de la figure 3A, certains éléments seulement du véhicule étant visibles.

### EXPOSÉ DÉTAILLÉ DE MODES DE RÉALISATION PARTICULIERS

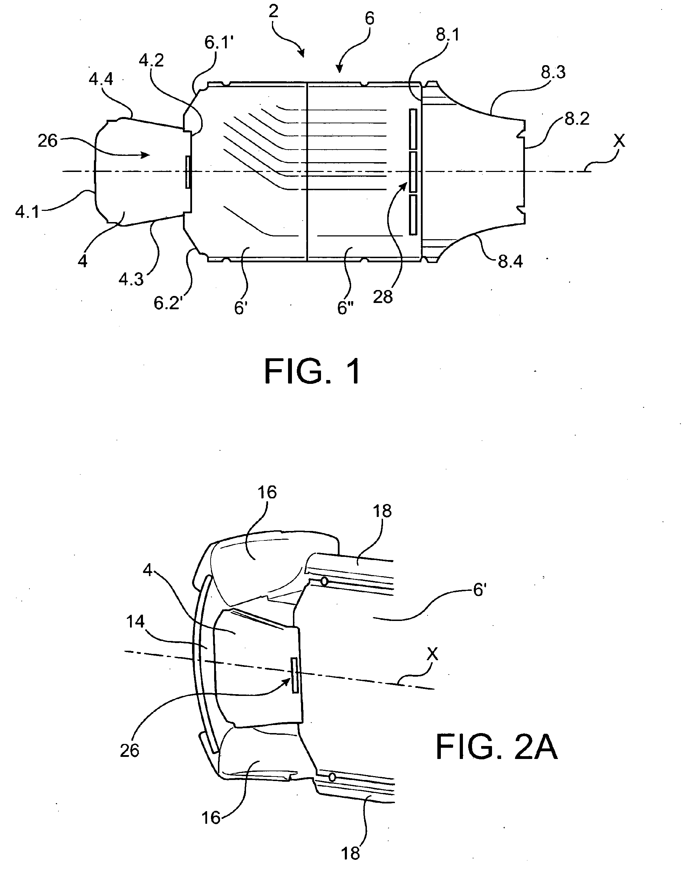

Sur la figure 1, on peut voir un carénage 2 selon la présente invention tel qu'il serait vu par une personne allongée sous le véhicule automobile, sur lequel le carénage est monté.

Le carénage 2 selon la présente invention est destiné à être fixé sur la partie inférieure d'une caisse d'un véhicule automobile (figure 4), par exemple un véhicule tout chemin, de manière à venir s'interposer entre le sous caisse et la route.

De manière avantageuse et tel que représenté, le carénage 2 d'axe longitudinal X comporte au moins trois parties 4, 6, 8, se succédant selon l'axe longitudinal X. Ces trois parties 4, 6, 8 comportent une partie avant 4, une partie centrale 6 et une partie arrière 8 destinées à recouvrir une zone avant, une zone centrale et une zone arrière du sous caisse du véhicule respectivement.

On peut envisager un carénage monobloc, cependant sa fabrication et son montage sont plus complexes.

La partie avant 4 est destinée à être montée au droit du compartiment avant 23 du véhicule, et à recouvrir un berceau avant 10 du véhicule automobile, le berceau formant support pour un essieu avant.

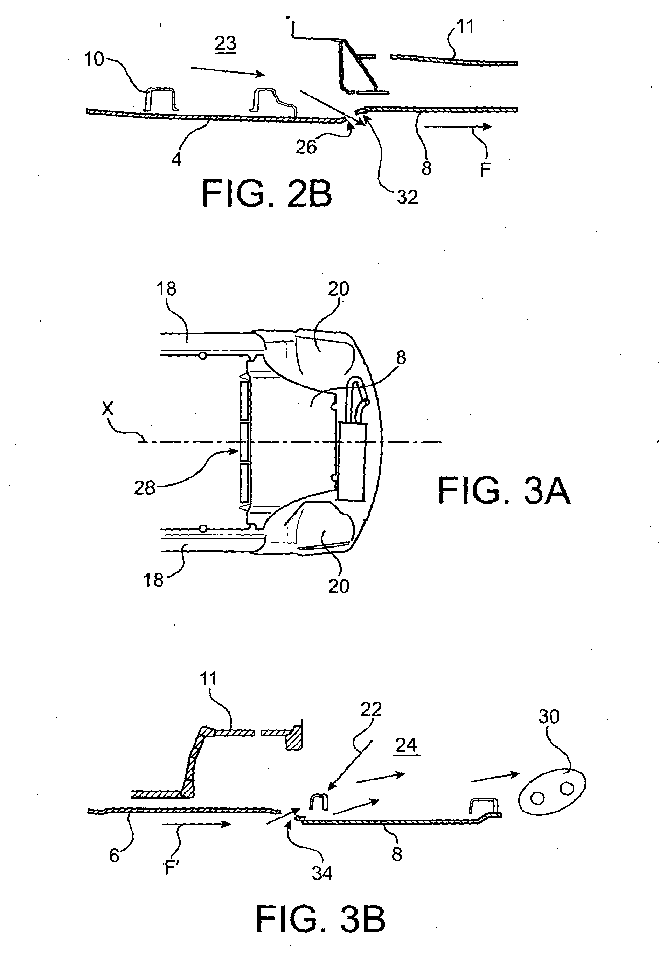

Dans l'exemple représenté en détail sur les figures 2A et 2B, la partie avant 4 a une forme de trapèze isocèle, dont une plus grande base 4.1 et une plus petite base 4.2 forment les extrémités longitudinales de la partie avant 4.

La plus petite base 4.2 de la partie avant 4 est destinée à se raccorder à la partie centrale 6.

La partie avant 4 se raccorde, par exemple, à un bouclier avant 14 du véhicule automobile et à des écrans 16 de passage de roue avant.

La partie avant 4 est fixée au berceau avant 10.

La partie centrale 6 a sensiblement la forme d'un rectangle, dont la longueur est orientée suivant l'axe X.

Dans un exemple avantageux, la partie centrale 6 est formée d'un premier 6' et d'un deuxième 6" élément rectangulaire. Les deux éléments 6', 6" sont sensiblement symétriques, leur longueur étant orientée perpendiculairement à l'axe X.

Cette réalisation en deux éléments 6', 6" facilite le procédé de fabrication de cette partie centrale 6 et son montage sur le véhicule.

Le premier élément 6' comporte deux angles biseautés 6.1', 6.2' du côté de la partie avant 4, se raccordant respectivement aux écrans 16 de roue avant, de manière à ménager, avec des côtés 4.3, 4.4 reliant la grande base 4.1 et la petite base 4.2, des espaces libres pour les roues avant du véhicule automobile.

La partie centrale 6 est destinée à recouvrir un châssis 11 du véhicule automobile, sensiblement au dessous de l'habitacle. Celle-ci se raccorde latéralement à des élargisseurs 18 de bavolet et aux parties de carénages avant 4 et arrière 8.

La partie arrière 8 représentée en détail sur les figures 2A et 2B, a sensiblement la forme d'un trapèze dont des côtés 8.3, 8.4 reliant les bases, sont formés par des arcs de cercle concaves pour se raccorder à des écrans 20 de passage de roues arrière, ménageant ainsi un espace libre 12 pour les roues arrières.

Le trapèze comporte une grande base 8.1 du côté de la partie centrale 6, et une petite base 8.2 à une extrémité arrière du véhicule automobile.

La partie arrière 8 est destinée à se raccorder aux écrans 20 de passage de roue arrière et à la partie centrale 6. La partie arrière 8 est, par exemple fixée sur un berceau arrière 22, supportant un essieu arrière.

La fixation du carénage sur les berceaux avant 10 et arrière 22 et sur le châssis 11 peut être obtenue au moyen de vis, et/ou de rivet en plastique et/ou par encliquetage au moyen d'agrafes et de goujons.

Le véhicule automobile comportant un carénage selon la présente invention peut comprendre un groupe motopropulseur disposé dans le compartiment arrière 24 du véhicule automobile, dans ce cas la partie arrière 8 de carénage forme un carénage sous moteur.

Il est prévu dans un exemple de réalisation particulièrement avantageux, de réaliser les différentes parties du carénage en matériau thermoplastique injecté, par exemple en matériau thermoplastique recyclé. Ce choix de matériau permet d'avoir un carénage dont le poids est réduit par rapport à un carénage en tôle d'acier.

D'autres matériaux, par exemple des matériaux composites type résine plus ou moins chargée en fibres de verre, ou des alliages métallique peuvent être envisagés. Dans ce dernier cas, la mise en en forme d es différentes parties peut être obtenue par emboutissage.

Selon la présente invention, les parties avant 4 et arrière 8 sont configurées pour permettre une circulation d'air dans des compartiments avant 23 et arrière 24 du véhicule automobile.

Pour cela, la partie avant 4 comporte des moyens d'extraction 26 de l'air contenu dans le compartiment avant 23 du véhicule automobile, et la partie arrière 8 comporte des moyens d'admission d'air 28 dans le compartiment arrière 24.

Selon la présente invention, la partie centrale 6 se situe en retrait par rapport aux parties avant 4 et arrière 8. La partie centrale est disposée dans un plan moyen décalé parallèlement par rapport à des plans moyens contenant les parties avant 4 et arrière 8. Ainsi, la partie centrale 6 se raccordent, respectivement, aux parties avant 4 et arrière 8 par un premier 32 et un deuxième 34 décrochement en regard.

Les moyens d'extraction d'air 26 comportent alors une ouverture au niveau de l'extrémité 4.2 de la partie avant, s'étendant transversalement par rapport à l'axe.

La zone où débouche l'ouverture se trouvant en dépression, une circulation de l'air contenu dans le compartiment avant 22 vers l'extérieur est obtenue, symbolisée par les flèches F. Le compartiment avant peut comporter une valise de refroidissement, cette circulation d'air facilite alors la dissipation de la chaleur.

Les moyens d'admission d'air 28 comportent alors au moins une ouverture au niveau de l'extrémité 8.1 de la partie arrière 8. La zone en dessous du châssis 11 où s'ouvre l'ouverture est en pression, ainsi l'air entre dans le compartiment arrière et refroidit le groupe motopropulseur et la ligne d'échappement. La circulation d'air est symbolisée par les flèches F'.

Les moyens d'admission 28 comportent avantageusement plusieurs ouvertures en forme de fente s'étendant perpendiculairement à l'axe X.

Cette disposition peut être réalisée de manière artificielle, alors même que le sous caisse n'offre pas cette configuration, ou peut correspondre à la géométrie du sous caisse, comme c'est le cas dans l'exemple représenté, dans lequel une extrémité inférieure du châssis 11 est en retrait par rapport aux berceaux avant 10 et arrière 22.

Le carénage selon la présente invention forme alors un fond avec de grandes surfaces sensiblement planes, qui facilite l'écoulement de l'air, augmente l'aérodynamisme du véhicule et, de manière très avantageuse, contribue à améliorer la stabilité du véhicule automobile en réduisant sa portance.

Dans l'exemple représenté, les ouvertures d'extraction d'air 26 et d'admission d'air 28 sont réalisées, respectivement, dans les parties avant et arrière. Mais, on peut envisager de le réaliser dans les extrémités avant et arrière de la partie centrale 6.

Dans l'exemple représenté, le carénage ne recouvre pas une zone de l'échappement 30 (figure 3B) qui, lors du fonctionnement du moteur, atteint des températures très élevées qu'un matériau thermoplastique ne peut supporter. Cependant, selon les matériaux utilisés pour le carénage, on peut envisager de recouvrir cette zone de l'échappement pour obtenir un carénage complet du sous caisse.

Le carénage selon la présente invention peut être monté sur le véhicule automobile lors de sa fabrication sur la chaîne d'assemblage, de série ou en option.

Celui-ci peut également être vendu à titre d'accessoire pour équiper un véhicule après sa mise en circulation.

## Revendications

1. Carénage sous caisse de véhicule automobile d'axe longitudinal (X) destiné à s'étendre d'un dessous d'un compartiment avant (23) du véhicule automobile à un dessous d'un compartiment arrière (24) du véhicule automobile, **caractérisé en ce qu'**il comporte des moyens d'extraction d'air (26) contenu dans le compartiment avant (23) et des moyens d'admission d'air (28) contenu dans le compartiment arrière (24).

2. Carénage selon la revendication 1, comportant au moins trois parties (4, 6, 8), une partie avant (4) située dans un premier plan, une partie centrale (6) disposée dans un deuxième plan, et une troisième partie (8) disposée dans un troisième plan, les premier, deuxième et troisième plans étant sensiblement parallèles entre eux, le deuxième plan étant décalé suivant un axe sensiblement perpendiculaire au deuxième plan par rapport aux premier et troisième plans de manière à former des premier et deuxième décrochements (32, 34) au niveau, respectivement, des raccordements entre les première (4) et deuxième (6) parties, et les deuxième (6) et troisième (8) parties, les décrochements (32, 34) étant sensiblement en regard, et dans lequel les moyens d'extraction d'air (26) comportent au moins une ouverture pratiquée dans le premier décrochement (32), et les moyens d'admission d'air (28) comportant au moins une ouverture pratiquée dans le deuxième décrochement (34).

3. Carénage selon la revendication 2, dans lequel l'ouverture des moyens d'extraction d'air (26) est en forme de fente s'étendant perpendiculairement par rapport à l'axe longitudinal (X), et dans lequel les moyens d'admission d'air (28) comportent plusieurs ouvertures en forme de fente s'étendant perpendiculairement à l'axe longitudinal (X).

4. Carénage selon revendication 2 ou 3, dans lequel la partie avant (4) a la forme d'un trapèze isocèle dont la plus petite base (4.2) se raccorde à la partie centrale (6), la partie centrale (6) est de forme sensiblement rectangulaire, dont la longueur est orientée parallèlement à l'axe longitudinal (X), et la partie arrière (8) a sensiblement la forme d'un trapèze isocèle, dont une grande base (8.1) se raccorde à la partie centrale (6), les côtés (8.3, 8.4) reliant la grande base (8.1) à une petite base (8.2) de ladite troisième partie (8) étant concaves.

5. Carénage selon la revendication 4, dans lequel la partie centrale (6) comporte deux éléments (6', 6") de forme rectangulaire dont la longueur est orientée perpendiculairement à l'axe longitudinal (X).

6. Carénage selon l'une quelconque des revendications précédentes, réalisé en matériau thermoplastique injecté.

7. Véhicule automobile comportant un châssis (11), des berceaux avant (10) et arrière (22) et un carénage sous caisse selon l'une quelconque des revendications précédentes, ledit carénage étant fixé aux berceaux avant (10) et arrière (22) et au châssis (11).

8. Véhicule selon la revendication 7, dans lequel la partie avant (4) du carénage se raccorde à un bouclier avant et à des écrans (16) de passage de roue avant du véhicule automobile, la partie centrale (6) se raccorde à des élargisseurs (18) de bavolet du véhicule automobile et aux parties avant (4) et arrière (8), et la partie arrière (8) se raccorde à la partie centrale (6) et à des écrans (20) de passage de roue arrière du véhicule automobile.

9. Véhicule automobile selon la revendication 7 ou 8, comportant un groupe motopropulseur disposé dans le compartiment arrière (24) et une batterie et un radiateur disposés dans le compartiment avant (23).

10. Véhicule selon l'une des revendications 7 à 9, comportant une caisse rapportée sur le châssis (11), dans lequel le châssis (11) est réalisé avec des profilés et/ou tubes en aluminium.

## Claims

1. Motor vehicle underbody shielding of longitudinal axis (X) intended to extend from an underside of a front compartment (23) of the motor vehicle to an underside of a rear compartment (24) of the motor vehicle, **characterized in that** it comprises means (26) for extracting air which is contained in the front compartment (23) and means (28) for admitting air which is contained in the rear compartment (24).

2. Shielding according to Claim 1, comprising at least three parts (4, 6, 8), namely a front part (4) situated in a first plane, a central part (6) arranged in a second plane, and a third part (8) arranged in a third plane, the first, second and third planes being substantially parallel to one another, the second plane being set back, along an axis substantially perpendicular to the second plane, with respect to the first and third planes so as to form first and second offsets (32, 34) at the respective connections between the first (4) and second (6) parts, and the second (6) and third (8) parts, the offsets (32, 34) substantially facing one another, and wherein the air extraction means (26) comprise at least one opening made in the first offset (32), and the air admission means (28) comprise at least one opening made in the second offset (34).

3. Shielding according to Claim 2, wherein the opening of the air extraction means (26) is in the form of a slot extending perpendicularly with respect to the longitudinal axis (X), and wherein the air admission means (28) comprise a plurality of openings in the form of slots extending perpendicularly to the longitudinal axis (X).

4. Shielding according to Claim 2 or 3, wherein the front part (4) has the shape of an isosceles trapezium of which the smaller base (4.2) is connected to the central part (6), the central part (6) is of substantially rectangular shape, the length of which is oriented parallel to the longitudinal axis (X), and the rear part (8) has substantially the shape of an isosceles trapezium of which a large base (8.1) is connected to the central part (6), the sides (8.3, 8.4) which join the large base (8.1) to a small base (8.2) of the said third part (8) being concave.

5. Shielding according to Claim 4, wherein the central part (6) comprises two elements (6', 6") of rectangular shape of which the length is oriented perpendicularly to the longitudinal axis (X).

6. Shielding according to any one of the preceding claims, which is made of injection-moulded thermoplastic.

7. Motor vehicle comprising a chassis (11), front (10) and rear (22) cradles, and an underbody shielding according to any one of the preceding claims, the said shielding being fastened to the front (10) and rear (22) cradles and to the chassis (11).

8. Vehicle according to Claim 7, wherein the front part (4) of the shielding is connected to a front bumper and to front wheelhouse shields (16) of the motor vehicle, the central part (6) is connected to side skirt extenders (18) of the motor vehicle and to the front (4) and rear (8) parts, and the rear part (8) is connected to the central part (6) and to rear wheelhouse shields (20) of the motor vehicle.

9. Motor vehicle according to Claim 7 or 8, comprising a propulsion unit which is arranged in the rear compartment (24) and a battery and a radiator which are arranged in the front compartment (23).

10. Vehicle according to one of Claims 7 to 9, comprising a body attached onto the chassis (11), wherein the chassis (11) is produced with aluminium profiles and/or tubes.

## Patentansprüche

1. Unterbodenverkleidung eines Kraftfahrzeugs mit einer Längsachse (X), die sich von der Unterseite eines vorderen Raums (23) des Kraftfahrzeugs zu einer Unterseite eines hinteren Raums (24) des Kraftfahrzeugs erstrecken soll, **dadurch gekennzeichnet, dass** sie Mittel (26) zum Abziehen von Luft, die in dem vorderen Raum (23) enthalten sind, und Mittel (28) zum Einlassen von Luft, die in dem hinteren Raum (24) enthalten sind, aufweist.

2. Unterbodenverkleidung nach Anspruch 1, die mindestens drei Teile (4, 6, 8) umfasst, wobei sich ein vorderer Teil (4) in einer ersten Ebene befindet, ein mittlerer Teil (6) in einer zweiten Ebene angeordnet ist und ein dritter Teil (8) in einer dritten Ebene angeordnet ist, wobei die erste, die zweite und die dritte Ebene im Wesentlichen parallel zueinander verlaufen, wobei die zweite Ebene entlang einer im Wesentlichen senkrecht zur zweiten Ebene verlaufenden Achse bezüglich der ersten und der dritten Ebene versetzt ist, um einen ersten und einen zweiten Absatz (32, 34) bei den Verbindungen zwischen dem ersten (4) und dem zweiten (6) Teil bzw. dem zweiten (6) und dem dritten (8) Teil zu bilden, wobei sich die Absätze (32, 34) im Wesentlichen gegenüberliegen, und wobei die Mittel (26) zum Abziehen von Luft mindestens eine Öffnung umfassen, die in dem ersten Absatz (32) ausgebildet ist, und die Mittel (28) zum Einlassen von Luft mindestens eine Öffnung umfassen, die in dem zweiten Absatz (34) ausgebildet ist.

3. Unterbodenverkleidung nach Anspruch 2, wobei die Öffnung der Mittel (26) zum Abziehen von Luft in Form eines Schlitzes vorliegt, der sich bezüglich der Längsachse (X) senkrecht erstreckt, und wobei die Mittel (28) zum Einlassen von Luft mehrere schlitzförmige Öffnungen aufweisen, die sich senkrecht zur Längsachse (X) erstrecken.

4. Unterbodenverkleidung nach Anspruch 2 oder 3, wobei der vordere Teil (4) die Form eines gleichschenkligen Trapezes aufweist, dessen kleinste Basis (4.2) am mittleren Teil (6) anschließt, wobei der mittlere Teil (6) eine im Wesentlichen rechteckige Form aufweist, dessen Länge parallel zur Längsachse (X) ausgerichtet ist, und wobei der hintere Teil (8) im Wesentlichen die Form eines gleichschenkligen Trapezes aufweist, von dem eine große Basis (8.1) an dem mittleren Teil (6) anschließt, wobei die Seiten (8.3, 8.4), die die große Basis (8.1) mit einer kleinen Basis (8.2) des dritten Teils (8) verbinden, konkav sind.

5. Unterbodenverkleidung nach Anspruch 4, wobei der mittlere Teil (6) zwei Elemente (6', 6") rechteckiger Form aufweist, deren Länge senkrecht zur Längsachse (X) ausgerichtet ist.

6. Unterbodenverkleidung nach einem der vorhergehenden Ansprüche, die aus einem thermoplastischen Spritzmaterial hergestellt ist.

7. Kraftfahrzeug, das ein Chassis (11), eine vordere (10) Schleife und eine hintere (22) Schleife und eine Unterbodenverkleidung nach einem der vorhergehenden Ansprüche aufweist, wobei die Verkleidung an der vorderen (10) und der hinteren (22) Schleife und am Chassis (11) befestigt ist.

8. Fahrzeug nach Anspruch 7, wobei der vordere Teil (4) der Verkleidung an einem vorderen Leitflügel und an Abschirmungen (16) zum Passieren des Vorderrads des Kraftfahrzeugs anschließt, wobei der mittlere Teil (6) an Lappenverbreiterungen (18) des Kraftfahrzeugs und am vorderen (4) und hinteren (8) Teil anschließt und der hintere Teil (8) am mittleren Teil (6) und an Abschirmungen (20) zum Passieren des Hinterrads des Kraftfahrzeugs anschließt.

9. Kraftfahrzeug nach Anspruch 7 oder 8, das eine Antriebseinheit, die in dem hinteren Raum (24) angeordnet ist, und eine Batterie und einen Kühler aufweist, die im vorderen Raum (23) angeordnet sind.

10. Fahrzeug nach einem der Ansprüche 7 bis 9, das einen Aufbau aufweist, der an dem Chassis (11) angeschlossen ist, wobei das Chassis (11) mit Aluminiumprofilen und/oder -rohren hergestellt ist.
